# EUROPÄISCHE PATENTSCHRIFT

(11) **EP 0 759 843 B1**
(45) Veröffentlichungstag und Bekanntmachung des Hinweises auf die Patenterteilung: **28.10.1998**
(21) Anmeldenummer: 95920819.0
(22) Anmeldetag: 17.05.1995
(51) Int. Cl.: B29C 31/04, B29C 43/34

(54) **VERFAHREN UND VORRICHTUNGEN ZUR HERSTELLUNG EINES FORMKÖRPERS AUS KUNSTSTOFF**
METHOD AND DEVICES FOR PRODUCING A MOULDED PLASTIC ARTICLE
PROCEDE ET DISPOSITIFS POUR LA FABRICATION D'UN CORPS MOULE EN MATIERE PLASTIQUE

(30) Priorität: 18.05.1994 DE 4417435
(43) Veröffentlichungstag der Anmeldung: 05.03.1997
(73) Patentinhaber: AISA AUTOMATION INDUSTRIELLE SA, 1896 Vouvry (CH)
(72) Erfinder: HANOT, Dominique, 74500 Lugrin (FR); KELLER, Gerhard, 1805 Jongny (CH); ROEDER, Ralph, 1822 Chernex (CH)
(74) Vertreter: Patentanwälte Zellentin & Partner
(86) Internationale Anmeldenummer: EP9501863
(87) Internationale Veröffentlichungsnummer: WO9531320

(56) Entgegenhaltungen:
- CH-A- 443 647
- GB-A- 155 922
- US-A- 1 590 924
- US-A- 1 780 550
- US-A- 1 798 217
- US-A- 2 448 915
- US-A- 2 894 285
- PATENT ABSTRACTS OF JAPAN vol. 007 no. 165 (M-230) ,20.Juli 1983 & JP,A,58 071118 (TOSHIBA KIKAI KK) 27.April 1983,

## Beschreibung

Die Erfindung betrifft ein Verfahren und Vorrichtungen zur Herstellung eines Formkörpers aus Kunststoff durch Abtrennen von einzelnen Materialportionen von einem aus einer verschließbaren Ausgabeöffnung eines Materialgebers austretenden vertikal abwärts gerichteten Materialstrom aus durch Wärme plastifiziertem Kunststoff und Überführen der abgetrennten Materialportion in einen Formhohlraum und Verpressen zu einem Formkörper durch Schließen des Formhohlraums.

Ein derartiges Verfahren und eine derartige Vorrichtung sind aus der DE-C3- 30 23 415 bekannt. Nach diesem Verfahren und in der Vorrichtung werden ringförmige Rohlinge durch das Abtrennen einzelner Materialportionen durch Verschließen eines zum Formhohlraum gerichteten Rohrteils des Materialgebers durch einen in axialer Richtung gegen das Rohrende verschiebbaren Schließkörper gewonnen, wobei die abgetrennten ringförmigen Materialportionen im freien Fall in den Formhohlraum überführt werden. Hierbei werden die ringförmigen Materialportionen durch Steuerung des Schließkörpers zu im Querschnittsprofil etwa linsenförmigen Rohlingen geformt. Vorzugsweise werden die ringförmigen Rohlinge durch einen auf die Trennstelle gerichteten Gasstrom vom Schließkörper gelöst.

Bei diesem Verfahren ist ein kompliziertes Düsensystem erforderlich, das zudem eine spezifische Schließcharakteristik erfordert, um die jeweils gewünschte Querschnittsform des ringförmigen Rohlings zu erhalten. Da thermoplastisches Kunststoffmaterial starke Klebe- oder Hafteigenschaften aufweist, sind in der Regel auch noch zusätzliche Maßnahmen, wie das Vorsehen von Heißluftströmen zum Ablösen des hergestellten Rohlings von der Schließvorrichtung, erforderlich.

Ein weiteres Verfahren und eine weitere Vorrichtung sind aus der EP-B1- 328 096 bekannt. Hierbei wird ein Rohling durch eine Düse ausgegeben und abgetrennt, wobei das gesamte für einen Rohling erforderliche erwärmte thermoplastische Material auf einem unter die Düse ausfahrbaren Zwischenträger abgelegt wird, dessen Oberfläche einen Teil der Preßform bildet. Vor oder beim Schließen der Form wird der Zwischenträger abgesenkt und überführt so den Rohling in die Preßform. Bei dieser Vorrichtung ist durch den ausfahrbaren Zwischenträger die Preßform komplizierter und damit auch teuerer.

Nach dem Verfahren gemäß der DE-C3- 30 23 415 können nur ringförmige Rohlinge hergestellt werden. Gemäß der EP-B1- 328 096 können die Rohlinge auch eine ringförmige Gestalt aufweisen. Im Zusammenhang mit der Herstellung von Formkörpern in Form einer Tube, die eine verschlossene Ausgabeöffnung haben soll, z. B. einer durchstechbaren Membran oder im Falle von sogenannten "Twist Off"- oder "Brake Off"-Tuben, bei welchen die Austrittsöffnung erst nach dem Abdrehen und/oder Abbrechen eines entsprechend ausgebildeten Verschlußteiles freigegeben wird, ergeben sich bei der Verwendung von ringförmigen Rohlingen Probleme, da beim Verpressen oftmals blasenförmige Lufteinschlüsse oder Fehlstellen auftreten, so daß Ausschuß entsteht.

Aus der US-A- 2 894 285 ist eine Vorrichtung zur Abgabe einer Materialportion bekannt, wonach thermoplastisches Material aus einem schräg angeordneten Extruder durch eine Ausgabeöffnung in eine schräg verlaufende, kanalförmige Kammer unter Druckanwendung ausgebracht wird, wonach durch einen Kolben die Ausgabeöffnung verschlossen und die hierdurch abgetrennte Materialportion durch die genannte Kammer hindurch letztlich zu einem Formhohlraum transportiert wird, wobei Abstreiffinger sich um den Kolben schließen und bei dessen Rückzug die Materialportion vom Kolben abstreifen.

Aufgabe der Erfindung ist es, ein Verfahren und eine Vorrichtung anzugeben, mit der auf einfache und schnelle Weise insbesondere geschlossene Materialportionen gewünschter Größe ohne Zusatzmaßnahmen gewinnbar sind sowie eine Vorrichtung anzugeben, mit der auf einfache Art und gewünschte - insbesondere geschlossene - Materialportionen herstellbar sind und die einen einfachen Aufbau aufweisen. Außerdem soll es das Verfahren und die Vorrichtung ermöglichen, einwandfreie Tuben mit zunächst geschlossener Ausgabeöffnung herzustellen.

Diese Aufgabe wird durch ein Verfahren mit den Merkmalen des Anspruchs 1 sowie durch Vorrichtungen mit den Merkmalen des Anspruchs 5 oder 6 gelöst. Vorzugsweise Ausgestaltungen des Verfahrens sind den Unteransprüchen 2 bis 7 sowie der Vorrichtungen dem Anspruch 7 zu entnehmen.

Nachstehend wird die Erfindung an einem Ausführungsbeispiel unter Hinweis auf Varianten sowie unter Bezug auf Zeichnungen näher erläutert. Es zeigt:
- Fig. 1: eine erfindungsgemäße Vorrichtung in schematischer Darstellung, bei der durch die geöffnete Ausgabeöffnung eines Materialgebers ein Materialstrom austritt;
- Fig. 2 bis 5: das gleiche wie in Fig. 1, jedoch in unterschiedlichen Verfahrensstadien der Bildung einer gewünschten Materialportion.

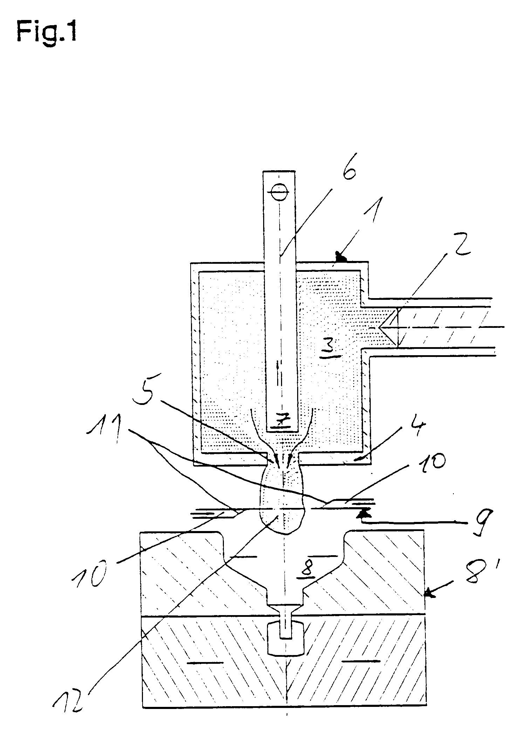

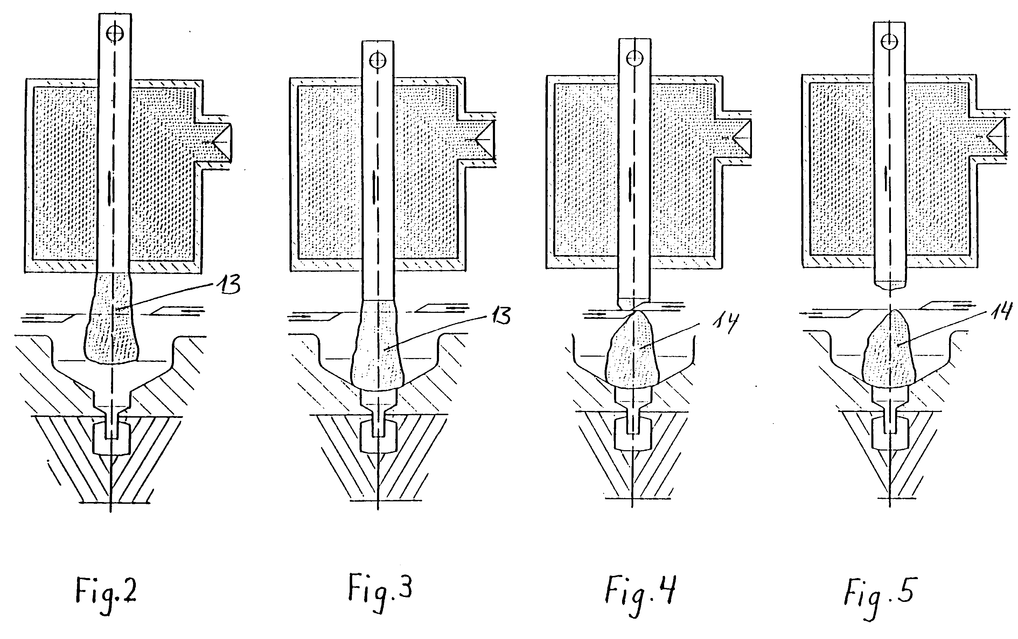

In einen Materialgeber 1 wird mittels einer Extruderschnecke 2 durch Wärme plastifizierter Kunststoff 3 zugeführt. Der Materialgeber 1 weist in seinem Boden 4 eine Ausgabeöffnung 5 auf. Im Materialgeber 1 ist ein Verschlußkörper 6 derart auf- und abbeweglich angeordnet und gestaltet, daß sein unteres Ende 7 in einer oberen Stellung (Fig. 1) die Ausgabeöffnung 5 zum Austritt von Kunststoff 3 freigibt, in einer mittleren abgesenkten Stellung (Fig. 2) die Ausgabeöffnung 5 verschließt und in einer unteren Stellung (Fig. 3, 4) in Richtung auf einen unter dem Materialgeber 1 anordenbaren Formhohlraum 8 eines Preßformteils 8', der eine beliebige bekannte - auch mehrteilige - Gestalt aufweisen kann (die Gegenform ist nicht dargestellt), aus dem Materialgeber 1 ausgefahren ist.

Zwischen dem Preßformteil 8' und dem Boden 4 des Materialgebers 1 ist eine Scherenvorrichtung 9 angeordnet, deren Messer 10 aufeinander zu und voneinander weg derart beweglich angeordnet sind, daß ihre Schneidkanten 11 am Ende eines Schneidvorgangs (s. Fig. 4) sich etwas überlappen. Die Messer 10 weisen vorzugsweise abgeschrägte Schneidkanten 11 auf.

Das Verfahren läuft wie folgt ab. Der Materialgeber 1 wird mit einem erwärmten thermoplastischen Kunststoff 3 durch die Extruderschnecke 2 gefüllt. Dann wird das Ende 7 des Verschlußkörpers 6 in Richtung der dem Boden 4 gegenüberliegenden Wand des Materialgebers 1 nach oben bewegt (s. Fig. 1), so daß die Ausgabeöffnung 5 freigegeben wird. Durch die Ausgabeöffnung 5 tritt, in Fig. 1 durch Pfeile gekennzeichnet, ein Materialstrom 12 aus thermoplastischem Kunststoff aus. Dann wird durch Abwärtsbewegen des Verschlußkörpers 6 die Ausgabeöffnung 5 verschlossen (s. Fig. 2). In dieser Position ist ein Materialstromteil 13 abgetrennt. Der Materialstromteil 13 hängt hierbei aufgrund der bei den bekannten Verfahren das Abtrennen der Rohlinge erschwerenden Kleb- oder Hafteigenschaften des thermoplastischen Kunststoffs am unteren Ende 7 des Verschlußkörpers 6 (s. Fig. 2).

Gemäß dem Ausführungsbeispiel wird anschließend der Verschlußkörper 6 mit dem an seinem unteren Ende 7 hängenden Materialstromteil 13 soweit weiter abgesenkt, bis das freie untere Ende des Materialstromteils 13 sich auf der Wandung des Formhohlraums 8 abstützt (s. Fig. 3). Sodann wird die Scherenvorrichtung 9 betätigt und ihre Messer 10 fahren aufeinander zu und trennen die gewünschte Materialportion 14 vom Materialstromteil 13 ab (s. Fig. 4), wobei die Materialportion 14 eine geschlossen kompakte tropfenähnliche Form aufweist. Sodann werden die Messer 10 der Scherenvorrichtung 9 in ihre Ausgangsposition zurückgefahren.

Die Scherenvorrichtung 9 kann höhenverstellbar (nicht dargestellt) angeordnet sein, um die Größe der abgetrennten Materialportionen 14 zu variieren. Es besteht auch die Möglichkeit, auf dem Rückzugsweg der Messer 10 eine - gegebenenfalls auch zustellbare - Reinigungsvorrichtung (nicht dargestellt) zur Reinigung der Messer 10 von gegebenenfalls anhaftendem Kunststoff vorzusehen.

Vorzugsweise sind die Scherenvorrichtung 9 und insbesondere deren Messer 10 gekühlt (nicht dargestellt), um weitgehend ein Anhaften von Kunststoff an den Messern 10 zu vermeiden. Zu diesem Zweck können die Messer 10 auch alternativ oder zusätzlich mit einer Antihaftbeschichtung versehen sein.

Die Größe des aus der Ausgabeöffnung 5 aus dem Materialgeber 1 austretenden Materialstroms 12 kann durch die Regelung des Abstandes des Endes 7 des Verschlußkörpers 6 von der Ausgabeöffnung 5 und/oder durch die Dauer des Offenhaltens der Ausgabeöffnung 5 gesteuert werden.

Es besteht auch die Möglichkeit, die Scherenvorrichtung 9 bereits in der in Fig. 2 dargestellten Position, bei der der Materialstromteil 13 noch am unteren Ende 7 des Verschlußkörpers 6 frei hängt, zu betätigen. Geht man so vor, würde die abgetrennte Materialportion 14 frei in den Formhohlraum 8 fallen. Hierdurch ließe sich die Frequenz der Herstellung der Materialportionen erhöhen, da der Verschlußkörper 6 periodisch einen geringeren Hubweg zurücklegen muß.

Durch die Absenkung des Verschlußkörpers 6 in die Ausgabeöffnung 5 hinein (s. Fig. 2) wird der Materialstrom 12 praktisch stillgesetzt, so daß ein sauberer Schnitt, ohne daß Material nachströmt, ermöglicht wird. Das Stillsetzen des Materialstroms kann auch dadurch vorgenommen werden, daß z. B. mittels der Bewegung eines Kolbens einer Kolbeneinheit (nicht dargestellt) im Innenraum des Materialgebers kurzzeitig ein Unterdruck erzeugt wird, so daß kein weiteres Material durch die offene Ausgabeöffnung 5 (Fig. 1) austreten kann.

## Patentansprüche

1. Verfahren zur Herstellung eines Formkörpers aus Kunststoff durch Abtrennen von einzelnen Materialportionen von einem aus einer verschließbaren Ausgabeöffnung eines Materialgebers austretenden vertikal abwärts gerichteten Materialstrom aus durch Wärme plastifiziertem Kunststoff und Überführen der abgetrennten Materialportion in einen Formhohlraum und Verpressen zu einem Formkörper durch Schließen des Formhohlraums,
dadurch gekennzeichnet,
daß das Abtrennen der jeweils gewünschten Materialportion vom Materialstrom unterhalb der Ausgabeöffnung und beabstandet zu ihr durch einen Scherenschnitt erfolgt, wobei der Materialstrom für das Abtrennen einer Materialportion kurzzeitig zum Stillstand gebracht wird.

2. Verfahren nach Anspruch 1,
dadurch gekennzeichnet,
daß der Materialstrom durch periodisches Verschließen der Ausgabeöffnung zum Stillstand gebracht wird.

3. Verfahren nach Anspruch 1 oder 2
dadurch gekennzeichnet,
daß ein Teil des Materialstroms durch den Verschlußkörper in den Formhohlraum überführt wird, wonach die gewünschte Materialportion vom Teil des Materialstroms abgeschnitten wird.

4. Verfahren nach Anspruch 1,
dadurch gekennzeichnet,
daß der Materialstrom durch kurzzeitiges Erzeugen eines Unterdrucks im Materialgeber zum Stillstand gebracht wird.

5. Vorrichtung zur Herstellung eines Formkörpers aus Kunststoff mit einem verschließbaren Formhohlraum (8) und einem über dem geöffneten Formhohlraum (8) anordenbaren Materialgeber (1) für durch Wärme plastifizierten Kunststoff (3) mit einer zum Formhohlraum (8) gerichteten mittels eines Verschlußkörpers (6) verschließbaren Ausgabeöffnung (5) zum Austritt eines Materialstroms (12) von plastifiziertem Kunststoff,
dadurch gekennzeichnet,
daß unterhalb und beabstandet zur Ausgabeöffnung (5) eine Scherenvorrichtung (9) zum Abtrennen von gewünschten Materialportionen (14) angeordnet ist und der Verschlußkörper (6) aus einer die Ausgabeöffnung (5) freigebenden Stellung aus dem Innenraum des Materialgebers (1) in die und durch die Ausgabeöffnung (5) hindurch in den geöffneten Formhohlraum (1) einführ- und wieder zurückziehbar angeordnet ist.

6. Vorrichtung zur Herstellung eines Formkörpers aus Kunststoff mit einem verschließbaren Formhohlraum (8) und einem über dem geöffneten Formhohlraum (8) anordenbaren Materialgeber (1) für durch Wärme plastifizierten Kunststoff (3) mit einer zum Formhohlraum (8) gerichteten mittels eines Verschlußkörpers (6) verschließbaren Ausgabeöffnung (5) zum Austritt eines Materialstroms (12) von plastifiziertem Kunststoff,
dadurch gekennzeichnet,
daß unterhalb und beabstandet zur Ausgabeöffnung (5) eine Scherenvorrichtung (9) zum Abtrennen von gewünschten Materialportionen (14) angeordnet ist und der Materialgeber mit einer Kolbeneinheit mit einem beweglichen Kolben zur kurzzeitigen Erzeugung eines Unterdrucks im Innenraum des Materialgebers versehen ist.

7. Vorrichtung nach Anspruch 5 oder 6,
dadurch gekennzeichnet,
daß die Scherenvorrichtung (9) gekühlt ist.

## Claims

1. Method for producing a moulded plastic article by cutting off individual material portions from a stream of plastic material plasticized by heat, which stream emerges from a closable delivery opening of a material dispenser and is directed vertically downwards and for transferring the cut-off material portion into a mould cavity and compressing it to form a moulded article by closing the mould cavity, characterized in that the cutting-off of the respectively desired material portion from the material stream takes place below the delivery opening and at a distance therefrom by a shearing cut, the stream of material briefly being brought to a standstill for the cutting-off of a material portion.

2. Method according to Claim 1, characterized in that the stream of material is brought to a standstill by periodic closing of the delivery opening.

3. Method according to Claim 1 or 2, characterized in that a part of the stream of material is transferred by the closure member into the mould cavity, whereupon the desired material portion is cut off part of the stream of material.

4. Method according to Claim 1, characterized in that the stream of material is brought to a standstill by briefly producing a reduced pressure in the material dispenser.

5. Apparatus for producing a moulded plastic article with a closable mould cavity (8) and a material dispenser (1), able to be located above the open mould cavity (8), for plastic material (3) plasticized by heat, with a delivery opening (5) directed towards the mould cavity (8) and able to be closed by means of a closing member (6), for the emergence of a stream of material (12) of plasticized plastic, characterized in that located below and at a distance from the delivery opening (5) is a shearing device (9) for cutting off desired portions of material (14) and the closure member (6) is arranged so that it can be introduced from a position freeing the delivery opening (5), from the interior of the material dispenser (1) into and through the delivery opening (5) into the open mould cavity (1) and so that it can be withdrawn again.

6. Device for producing a moulded plastic article with a closable mould cavity (8) and a material dispenser (1), able to be located above the open mould cavity (8), for plastic (3) plasticized by heat, with a delivery opening (5) directed towards the mould cavity (8) and able to be closed by means of a closing member (6), for the emergence of a stream of material (12) of plasticized plastic, characterized in that located below and at a distance from the delivery opening (5) is a shearing device (9) for cutting off desired material portions (14) and the material dispenser is provided with a piston unit with a movable piston for briefly producing a reduced pressure inside the material dispenser.

7. Device according to Claim 5 or 6, characterized in that the shearing device (9) is cooled.

## Revendications

1. Procédé pour la fabrication d'un corps moulé en matière plastique en séparant des portions individuelles de matériau d'un courant de matériau qui sort en étant dirigé vers le haut en provenance d'une ouverture de sortie obturable d'une source de matériau, ledit courant de matériau étant constitué de matière plastique rendue plastique par la chaleur, et en transmettant la portion de matériau séparée jusque dans une cavité de moulage et en la mettant sous pression sous forme d'un corps moulé par fermeture de la cavité de moule,
caractérisé en ce que
la séparation de la portion de matériau respectivement désirée depuis le courant de matériau a lieu au-dessous de l'ouverture de sortie et à distance de celle-ci par une opération de cisaillement, et le courant de matériau est amené brièvement à l'arrêt pour la séparation d'une portion de matériau.

2. Procédé selon la revendication 1,
caractérisé en ce que
le courant de matériau est amené à l'arrêt par obturation périodique de l'ouverture de sortie.

3. Procédé selon l'une ou l'autre des revendications 1 et 2,
caractérisé en ce que
une partie du courant de matériau est transférée à travers le corps d'obturation jusque dans la cavité de moule, suite à quoi la portion de matériau désirée est découpée d'une partie du courant de matériau.

4. Procédé selon la revendication 1,
caractérisé en ce que
le courant de matériau est amené à l'arrêt par production brève d'une dépression dans la source de matériau.

5. Appareil pour la fabrication d'un corps moulé en matière plastique, comprenant une cavité de moulage obturable (8) et une source de matériau (1), susceptible d'être agencée au-dessus de la cavité de moulage ouverte (8), pour une matière plastique (3) rendue plastique par la chaleur, et présentant un ouverture de sortie (5), dirigée vers la cavité de moulage (8) et susceptible d'être obturée au moyen d'un corps d'obturation (6), pour la sortie d'un courant de matériau (12) de matière plastique rendue plastique,
caractérisé en ce que
un dispositif de cisaillement (9) destiné à la séparation de portions désirées de matériau (14) est agencé au-dessous et à distance de l'ouverture de sortie (5), et en ce que le corps d'obturation (6) est agencé de manière à pouvoir être introduit et rétracté depuis une position qui libère l'ouverture de sortie (5) en traversant l'ouverture de sortie (5), jusque dans la cavité de moulage ouverte (1).

6. Appareil pour la fabrication d'un corps moulé en matière plastique, comprenant une cavité de moulage obturable (8) et une source de matériau (1), susceptible d'être agencée au-dessus de la cavité de moulage ouverte (8), pour une matière plastique (3) rendue plastique par la chaleur, et présentant une ouverture de sortie (5), dirigée vers la cavité de moulage (8) et susceptible d'être obturée au moyen d'un corps d'obturation (6) pour la sortie d'un courant de matériau (12) de matière plastique rendue plastique,
caractérisé en ce que
un dispositif de cisaillement (9) destiné à la séparation de portions désirées de matériau (14) est agencé au-dessous et à distance de l'ouverture de sortie (5), et en ce que la source de matériau est pourvue d'une unité à piston qui comprend un piston mobile destiné à produire brièvement une dépression dans la chambre intérieure de la source de matériau.

7. Appareil selon l'une ou l'autre des revendications 5 et 6,
caractérisé en ce que
le dispositif de cisaillement (9) est refroidi.
